# EUROPÄISCHE PATENTSCHRIFT

(11) **EP 0 951 814 B1**
(45) Veröffentlichungstag und Bekanntmachung des Hinweises auf die Patenterteilung: **14.05.2003**
(21) Anmeldenummer: 99107073.1
(22) Anmeldetag: 12.04.1999
(51) Int. Cl.: A01C 17/00, A01C 15/00

(54) **Schleuderdüngerstreuer**
Broadcaster
Epandeur centrifuge

(30) Priorität: 22.04.1998 DE 19818065
(43) Veröffentlichungstag der Anmeldung: 27.10.1999
(73) Patentinhaber: Amazonen-Werke H. Dreyer GmbH & Co. KG, 49205 Hasbergen (DE)
(72) Erfinder: Dreyer, Heinz, Dr., Dipl.-Ing., 49205 Hasbergen (DE)

(56) Entgegenhaltungen:
- DE-A- 4 302 802
- DE-A- 19 748 838
- US-A- 3 738 546

## Beschreibung

Die Erfindung betrifft einen Schleuderdüngerstreuer gemäß des Oberbegriffes des Patentanspruches 1.

Ein derartiger Schleuderdüngerstreuer ist beispielsweise in der DE-OS 43 02 802 beschrieben. Bei diesem Düngerstreuer ist an dem unteren Bereich des Vorratsbehälters über ein Flanschelement ein Auslaufelement angeordnet, dem ein Dosierorgan zugeordnet ist. Dieses Dosierorgan ist als in der Bodenplatte angeordnete Auslauföffnung mit zugeordnetem Schieber, mittels dem die Auslauföffnung in ihrer Öffnungsgröße einstellbar ist, ausgebildet. Das Dosierorgan ist für einen bestimmten Mengenbereich ausgelegt. Insbesondere, wenn bei großen Arbeitsbreiten sehr große Mengen Material ausgebracht werden sollen, hat sich herausgestellt, daß die gewünschten großen Mengen nicht in jedem Falle ausbringbar sind.

Der Erfindung liegt die Aufgabe zugrunde, den Schleuderdüngerstreuer in einfacher Weise auch für die Ausbringung von sehr großen Ausbringmengen ausrüsten zu können.

Diese Aufgabe wird erfindungsgemäß dadurch gelöst, daß verschiedene, vorzugsweise als Auslaßbehälter ausgebildete Auslaufelemente mit zugeordneten Dosierorganen zur Anordnung an dem Flanschelement vorgesehen sind. Infolge dieser Maßnahmen kann in überraschend einfacher Weise das für den geforderten Ausbringmengenbereich entsprechend ausgelegte Auslaufelement mit zugehörigem Dosierorgan über das Flanschelement an den Vorratsbehälter angeordnet werden.

Hierbei ist in bevorzugter Weise vorgesehen, daß Auslaufelemente mit unterschiedlich großen Auslauföffnungen vorgesehen sind, wobei die Größe der Auslaufelemente zumindest im Bereich der Auslauföffnung an die Größe der Auslauföffnung angepaßt ausgebildet ist. Hierdurch wird insbesondere erreicht, daß sehr kleine Restmengen bei der Entleerung des Vorratsbehälters im Vorratsbehälter verbleiben.

In vorteilhafter Weise lassen sich die Auslaufelemente aus nicht rostendem Material, insbesondere aus Kunststoffmaterial oder Metallguß herstellen.

Desweiteren ist es möglich, daß das Auslaufelement an dem Flanschelement verschiebbar gegenüber der Schleuderscheibe angeordnet ist. Infolge dieser Maßnahme kann eine Aufgabepunktverlagerung des Materials auf der Schleuderscheibe in einfacher Weise erreicht werden, um so den Schleuderdüngerstreuer beispielsweise in einfacher Weise von Normalstreuen auf Grenzstreuen oder umgedreht einzustellen. Hierbei ist in bevorzugter Weise vorgesehen, daß an dem Auslaufelement eine Skala angeordnet ist, an welcher die Öffnungsstellung des Schiebers einstellbar ist. Somit ist die Mengeneinstellvorrichtung für den Schieber an dem Auslaufelement angeordnet.

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in der Ansicht von hinten,
- Fig.2: ein an dem Vorratsbehälter angeordnetes Auslaufelement für kleine bis mittelgroße Ausbringmengen,
- Fig.3: ein an dem Vorratsbehälter angeordnetes Auslaufelement für Ausbringmengen bis zu einer sehr großen Menge und
- Fig.4: ein verschiebbar an dem Flanschelement angeordnetes Auslaufelement.

Der Schleuderdüngerstreuer weist den Vorratsbehälter 1 auf. Der Vorratsbehälter 1 ist an dem tragenden Rahmen 2 mit den Dreipunktkupplungselementen 3 angeordnet. Der Vorratsbehälter 1 ist durch ein dachförmiges Mittelteil 4 in die beiden Auslauftrichter 5 und 6 unterteilt. Die Auslauftrichter 5 und 6 gehen jeweils in ein Auslaßelement 7 über, dem jeweils ein Dosierorgan 8 zugeordnet ist. Unterhalb der Dosierorgane 8 befinden sich die mit Wurfschaufeln 9 besetzten Schleuderscheiben 10, welche in einem entgegengesetzten Drehsinn zueinander rotierend von einer Kraftquelle angetrieben werden.

Die Rührwellen 11 sind jeweils in den Auslaßelementen 7 und 8 gelagert.

Die Dosierorgane 9 weisen eine Bodenplatte 12 mit darin angeordneten, jedoch nicht dargestellten Auslauföffnungen auf, die über einen Schieber 13 in ihrer Öffnungsweite einstellbar ist, wobei die Öffnungsstellung des Schiebers 13 über die mit dem Anschlagelement 14 zusammenwirkende Skala 15 einstellbar ist.

Die Auslaufelemente 7 sind über die Flanschelemente 16 an den unteren Enden der Auslauftrichter 5, 6 angeordnet. Die Auslaufelemente 7 mit den zugehörigen Dosierorganen 8 sind für kleine bis mittlere Ausbringmengen vorgesehen. Die Größe der Auslaufelemente 7 ist im Bereich der Auslauföffnung an die Größe der Auslauföffnung angepaßt, so daß sich möglichst kleine Restmengen ergeben. Die Auslaufelemente 7 sind aus nichtrostendem Material, beispielsweise aus Kunststoffmaterial oder Metallguß hergestellt.

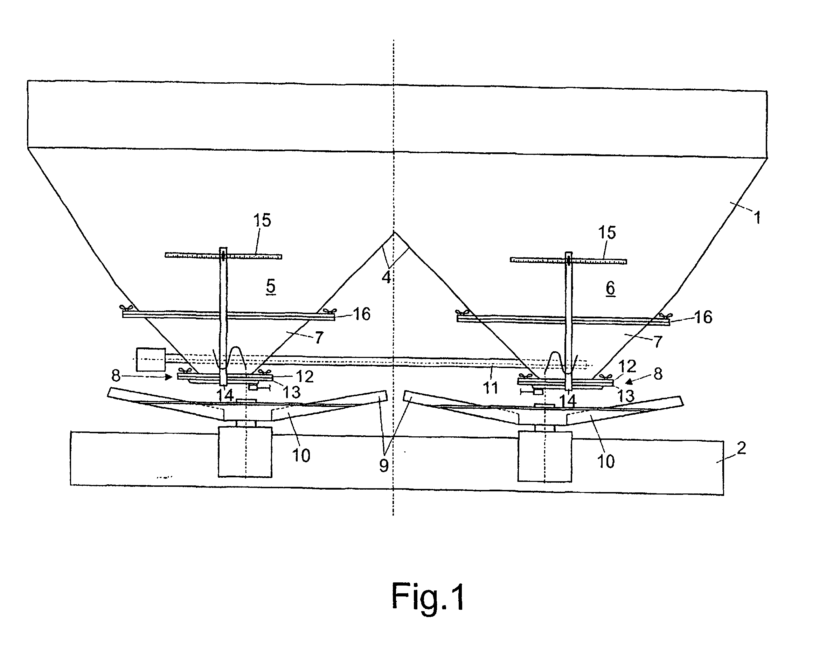

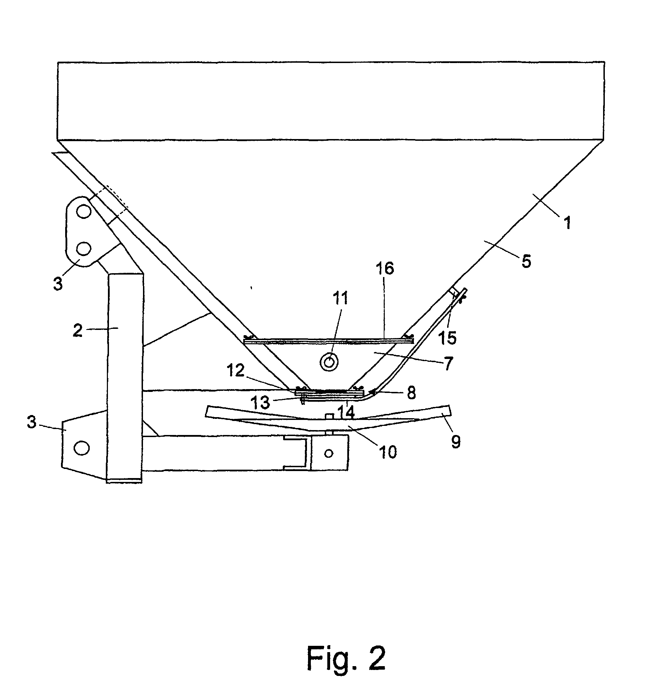

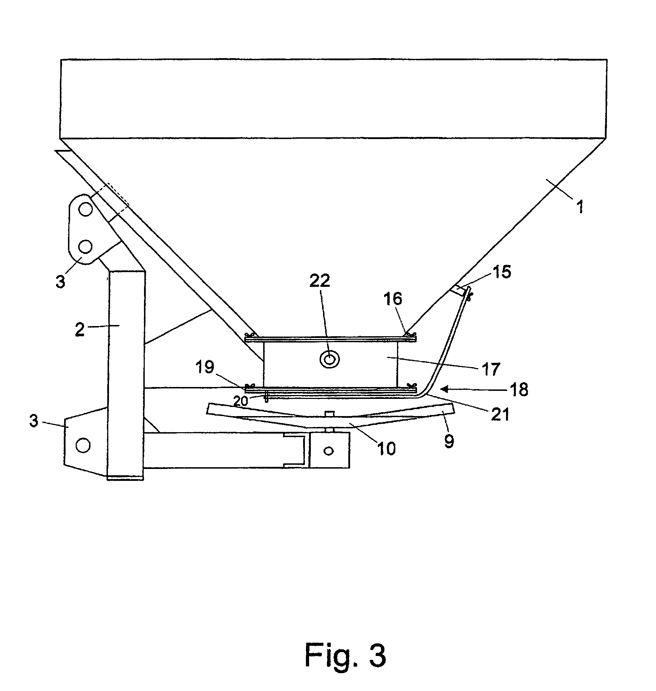

Wenn der Schleuderdüngerstreuer gemäß den Fig.1 und 2 für die Ausbringung von großen Ausbringmengen, insbesondere wenn auch große Arbeitsbreiten erreicht werden sollen, ausgestattet werden soll, werden an den Flanschelementen 16 die in Fig.3 dargestellten Auslaufelemente 17 angeordnet. Diese Auslaufelemente 17 weisen Dosierorgane 18 mit größeren Auslauföffnungen als die in den Auslaufelementen 7 in den Fig.1 und 2 befindlichen Auslauföffnungen auf. Somit sind die Dosierorgane 18 für die großen Ausbringmengen größer als die Dosierorgane 9 ausgelegt. Die Dosierorgane 18 der Auslaufelemente 17 weisen die in der Bodenplatte 19 angeordnete, jedoch nicht dargestellte Auslauföffnung auf, die über den Schieber 20 in ihrer Öffnungsweite einstellbar ist. Die Öffnungsstellung des Schiebers 20 wird durch den Anschlag 21 bestimmt, der anhand der Skala 15 einstellbar ist. Die Auslaufelemente 17 sind aus nichtrostendem Material, insbesondere Kunststoffmaterial oder Metallguß hergestellt. In der Seitenwand der Auslaufelemente ist das Rührelement 22 gelagert.

Wie aus der vorhergehenden Beschreibung anhand der Fig.1 und 3 entnehmbar ist, sind die Auslaufelemente 7 und 8 einerseits und 17 andererseits gegeneinander austauschbar und wahlweise an dem Flanschelement 16 entsprechend den Einsatzbedingung anzuordnen bzw. der Düngerstreuer ist entsprechend den geforderten Einsatzverhältnissen auszurüsten. Somit sind entsprechend des vorgesehenen Ausbringmengenbereiches ausgelegte Auslaßelemente 7, 8, 17 mit zugeordneten Dosierorganen 9, 18 in austauschbarer Weise vorgesehen.

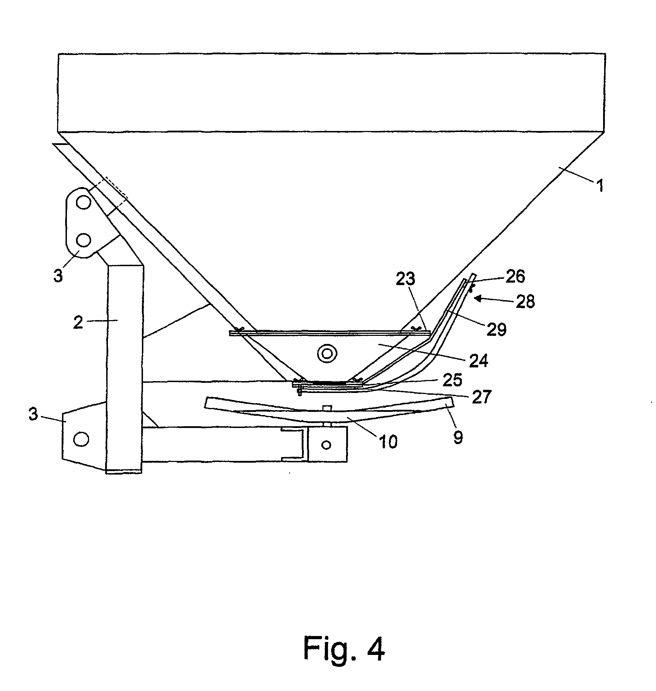

Weiterhin ist in einer weiteren Ausführungsform gemäß Fig.4 vorgesehen, daß das Flanschelement 23 zur Anordnung von gegenüber dem Vorratsbehälter 1 bzw. der Schleuderscheibe 11 verschiebbares Auslaufelement 24 vorgesehen ist. Hierzu kann entweder das Flanschelement 23 selbst mit Langlöchern, aufgrund derer das Auslaufelement 24 verschiebbar ist, versehen ist, oder an dem Flanschelement 23 ist eine Zwischenplatte vorgesehen, in welcher die Schiebeführungen zur Verschiebung des Auslaufelementes 24 gegenüber der Schleuderscheibe 11 angeordnet sind. Durch die Verschiebung des Auslaufelementes 24 mit den Dosierorganen 25 läßt sich der Aufbabepunkt des Materials auf der Schleuderscheibe 11 verlagern. An dem Auslaufelement 24 ist eine Skala 26 angeordnet, an welcher die Öffnungsstellung des Schiebers 27 über die Mengeneinstellvorrichtung 28 für den Schieber 27 einstellbar ist. Die Skala 26 und die Mengeneinstellvorrichtung 28 sind an einem an dem Auslaufelement 24 nach oben ragenden Halteelement 29 angeordnet. Zur Verstellung des Auslaufelementes 24 gegenüber der Schleuderscheibe 11 und dem Vorratsbehälter 1 ist ein nicht dargestelltes Einstellelement, welches motorisch ausgebildet oder angetrieben sein kann, zwischen dem Vorratsbehälter 1 und dem Auslaufelement 24 angeordnet.

## Patentansprüche

1. Schleuderdüngerstreuer mit einem zumindest teilweise trichterförmig ausgebildeten Vorratsbehälter, an dessen unterem Bereich zumindest ein Auslaufelement, dem ein Dosierorgan zugeordnet ist, über zumindest ein Flanschelement angeordnet ist, **dadurch gekennzeichnet, daß** verschiedene, vorzugsweise als Auslaßbehälter ausgebildete Auslaufelemente (7, 17, 24) mit zugeordneten Dosierorganen (8, 18, 25) zur Anordnung an dem Flanschelement (16, 23) vorgesehen sind.

2. Schleuderdüngerstreuer nach Anspruch 1, **dadurch gekennzeichnet, daß** entsprechend des vorgesehenen Ausbringmengenbereiches ausgelegte Auslaßelemente (7, 17, 24) mit zugeordneten Dosierorganen (8, 18, 25) in austauschbarer Weise vorgesehen sind.

3. Schleuderdüngerstreuer nach Anspruch 1, wobei das Dosierorgan als in einem Bodenelement angeordnete Auslauföffnung, deren Öffnungsweite durch einen mit der Auslauföffnung zusammenwirkendem Schieberelement einstellbar ist, ausgebildet ist, **dadurch gekennzeichnet, daß** Auslaufelemente (7, 17, 24) mit unterschiedlich großen Auslauföffnungen vorgesehen sind, wobei die Größe der Auslaufelemente (7, 17, 24) zumindest im Bereich der Auslauföffnung an die Größe der Auslauföffnung angepaßt ausgebildet ist.

4. Schleuderdüngerstreuer nach einem oder mehreren der vorstehenden Ansprüche, **dadurch gekennzeichnet, daß** die Auslaufelemente (7, 17, 24) aus nichtrostendem Material, insbesondere aus Kunststoffmaterial oder Metallguß, hergestellt sind.

5. Schleuderdüngerstreuer nach einem oder mehreren der vorstehenden Ansprüche, **dadurch gekennzeichnet, daß** dem Dosierorgan (8, 18, 25) ein Rührelement (11, 22) zugeordnet ist, welches in der Seitenwand des Auslaufelementes (7, 17, 24) gelagert und mit dem Auslaufelement austauschbar ist.

6. Schleuderdüngerstreuer nach einem oder mehreren der vorstehenden Ansprüche, **dadurch gekennzeichnet, daß** das Auslaufelement (24) an dem Flanschelement (23) verschiebbar gegenüber der Schleuderscheibe (10) angeordnet ist.

7. Schleuderdüngerstreuer nach einem oder mehreren der vorstehenden Ansprüche, **dadurch gekennzeichnet, daß** an dem Auslaufelement (24) eine Skala (26) angeordnet ist, an welcher die Öffnungsstellung des Schiebers (27) einstellbar ist.

8. Schleuderdüngerstreuer nach einem oder mehreren der vorstehenden Ansprüche, **dadurch gekennzeichnet, daß** die Mengeneinstellvorrichtung (28) für den Schieber (27) an dem Auslaufelement (24) angeordnet ist.

9. Schleuderdüngerstreuer nach einem oder mehreren der vorstehenden Ansprüche, **dadurch gekennzeichnet, daß** an dem Auslaufelement (24) ein nach oben ragendes Halteelement (29) angeordnet ist, an welchem die Skala (26) und die Mengeneinstelleinrichtung (28) angeordnet ist.

10. Schleuderdüngerstreuer nach einem oder mehreren der vorstehenden Ansprüche, **dadurch gekennzeichnet, daß** in der Flanschplatte (23) am Vorratsbehälter (1) und/oder an dem Auslaufelement (24) Schiebeführungen angeordnet sind.

11. Schleuderdüngerstreuer nach einem oder mehreren der vorstehenden Ansprüche, **dadurch gekennzeichnet, daß** zwischen dem Vorratsbehälter (1) und dem Auslaufelement (24) Einstelleinrichtungen angeordnet sind.

## Claims

1. Centrifugal fertiliser spreader, having a hopper which is at least partially in the form of a funnel, at least one outlet member, associated with a metering member, being disposed at the lower region of said hopper via at least one flange member, **characterised in that** various outlet members (7, 17, 24), preferably in the form of outlet vessels, are provided with associated metering members (8, 18, 25) for disposition on the flange member (16, 23).

2. Centrifugal fertiliser spreader according to claim 1, **characterised in that** outlet members (7, 17, 24), with associated metering members (8, 18, 25), are provided in an exchangeable manner, said outlet members being designed in accordance with the envisaged range of output quantities.

3. Centrifugal fertiliser spreader according to claim 1, wherein the metering member is in the form of an outlet aperture disposed in a bottom part, the width of opening of said aperture being adjustable by a slide member co-operating with the outlet aperture, **characterised in that** outlet members (7, 17, 24) are provided having outlet apertures of different sizes, the size of the outlet members (7, 17, 24) being adapted to the size of the outlet aperture, at least in the region of the outlet aperture.

4. Centrifugal fertiliser spreader according to one or more of the preceding claims, **characterised in that** the outlet members (7, 17, 24) are produced from rustproof material, more especially from plastics material or cast metal.

5. Centrifugal fertiliser spreader according to one or more of the preceding claims, **characterised in that** an agitating member (11, 22) is associated with the metering member (8, 18, 25), which agitating member is mounted in the lateral wall of the outlet member (7, 17, 24) and is exchangeable with the outlet member.

6. Centrifugal fertiliser spreader according to one or more of the preceding claims, **characterised in that** the outlet member (24) is disposed on the flange member (23) so as to be displaceable relative to the centrifugal disc (10).

7. Centrifugal fertiliser spreader according to one or more of the preceding claims, **characterised in that** a scale (26) is disposed on the outlet member (24), and the open position of the slide (27) can be set at said scale.

8. Centrifugal fertiliser spreader according to one or more of the preceding claims, **characterised in that** the quantity setting device (28) for the slide (27) is disposed on the outlet member (24).

9. Centrifugal fertiliser spreader according to one or more of the preceding claims, **characterised in that** an upwardly protruding retaining member (29) is disposed on the outlet member (24), and the scale (26) and the quantity setting device (28) are disposed on said retaining member.

10. Centrifugal fertiliser spreader according to one or more of the preceding claims, **characterised in that** slidable guides are disposed in the flange plate (23) on the hopper (1) and/or on the outlet member (24).

11. Centrifugal fertiliser spreader according to one or more of the preceding claims, **characterised in that** adjusting devices are disposed between the hopper (1) and the outlet member (24).

## Revendications

1. Epandeur centrifuge comportant un réservoir au moins en partie en forme d'entonnoir dont la zone inférieure comporte au moins un élément de sortie auquel est associé un organe de dosage par au moins un élément en forme de bride,
**caractérisé en ce que**
plusieurs éléments de sortie (7, 17, 24) de préférence réalisés sous la forme de trémies de sortie avec des organes de dosage (8, 18, 25) sont prévus pour être installés sur l'élément de bride (16, 23).

2. Epandeur centrifuge selon la revendication 1,
**caractérisé en ce que**
les éléments de sortie (7, 17, 24) et les organes de dosage (8, 18, 25) associés, réalisés selon les plages de quantité à distribuer, sont installés de manière interchangeable.

3. Epandeur centrifuge selon la revendication 1, dans lequel l'organe de dosage est réalisé par un orifice de sortie prévu dans l'élément de fond et dont le degré d'ouverture se règle par un élément de tiroir coopérant avec l'orifice de sortie,
**caractérisé en ce que**
les éléments de sortie (7, 17, 24) sont prévus avec des orifices de sortie de tailles différentes et la taille des éléments de sortie (7, 17, 24) est adaptée au moins dans la zone de l'orifice de sortie à la taille de l'orifice de sortie.

4. Epandeur centrifuge selon l'une ou plusieurs des revendications précédentes,
**caractérisé en ce que**
les éléments de sortie (7, 17, 24) sont réalisés en une matière inoxydable en particulier une matière plastique ou une fonte de métal.

5. Epandeur centrifuge selon l'une ou plusieurs des revendications précédentes,
**caractérisé en ce qu'**
un élément agitateur (11, 22) est associé à l'organe de dosage (8, 18, 25), cet élément étant monté dans la paroi latérale de l'élément de sortie (7, 17, 24) et peut être remplacé avec l'élément de sortie.

6. Epandeur centrifuge selon l'une ou plusieurs des revendications précédentes,
**caractérisé en ce que**
l'élément de sortie (24) est monté sur l'élément de bride (23) de manière coulissante par rapport au disque d'épandage (10).

7. Epandeur centrifuge selon l'une ou plusieurs des revendications précédentes,
**caractérisé en ce que**
l'élément de sortie (24) comporte une échelle ou graduation (26) permettant de régler la position d'ouverture du tiroir (27).

8. Epandeur centrifuge selon l'une ou plusieurs des revendications précédentes,
**caractérisé en ce que**
le dispositif de réglage de débit (28) du tiroir (27) est prévu sur l'élément de sortie (24).

9. Epandeur centrifuge selon l'une ou plusieurs des revendications précédentes,
**caractérisé en ce que**
sur l'élément de sortie (24) on a un élément de fixation (29) dirigé vers le haut et qui est muni de l'échelle ou graduation (26) et de l'installation de réglage de quantité (28).

10. Epandeur centrifuge selon l'une ou plusieurs des revendications précédentes,
**caractérisé en ce que**
la plaque formant la bride (23) du réservoir d'alimentation (2) et/ou de l'élément de sortie (24) comporte des guides de coulissement.

11. Epandeur centrifuge selon l'une ou plusieurs des revendications précédentes,
**caractérisé par**
des installations de réglage entre le réservoir d'alimentation (1) et l'élément de sortie (24).
